# EUROPÄISCHE PATENTSCHRIFT

(11) **EP 0 747 164 B1**
(45) Veröffentlichungstag und Bekanntmachung des Hinweises auf die Patenterteilung: **04.10.2001**
(21) Anmeldenummer: 96108655.0
(22) Anmeldetag: 30.05.1996
(51) Int. Cl.: B23K 35/363, C01F 7/54

(54) **Verfahren zur Herstellung eines Lötflussmittels**
Process for preparing brazing fluxes
Procédé pour la préparation de flux pour brasage

(30) Priorität: 07.06.1995 DE 19520812
(43) Veröffentlichungstag der Anmeldung: 11.12.1996
(73) Patentinhaber: Solvay Fluor und Derivate GmbH, 30173 Hannover (DE)
(72) Erfinder: Willenberg, Heinrich, 47533 Kleve (DE); Becher, Wilfried, (DE); Hellberg, Karl-Heinz, 74206 Bad Wimpfen (DE)
(74) Vertreter: Lauer, Dieter, Dr.

(56) Entgegenhaltungen:
- EP-A- 0 063 750
- EP-A- 0 597 652
- US-A- 4 579 605
- PATENT ABSTRACTS OF JAPAN vol. 018, no. 108 (M-1564), 22.Februar 1994 & JP-A-05 305480 (FURUKAWA ALUM CO LTD;OTHERS: 01), 19.November 1993,

## Beschreibung

Die vorliegende Erfindung betrifft ein Verfahren zur Herstellung einer Zusammensetzung, die Kaliumsalze von komplexen Fluoriden des Aluminiums enthält und als Flußmittel für das Löten von Leichtmetallwerkstoffen wie Aluminium geeignet ist.

Beim Hartlöten oder Ofenlöten werden Metallwerkstoffe, besonders Aluminium, bei einer Temperatur oberhalb von 500 °C mit Hilfe eines geschmolzenen Zusatzmetalls (Lot) verbunden. Die Schmelztemperatur des Lotes ist niedriger als die Schmelztemperatur der Werkstoffe, so daß diese häufig durch erneutes Schmelzen des Lotes zerstörungsfrei getrennt werden können.

Beim Löten stellen Oxide und andere störende Deckschichten auf der Metalloberfläche ein Problem dar: Die Oberfläche muß metallisch rein sein, damit eine einwandfreie Lötverbindung zustande kommt. Hierzu verwendet man Flußmittel, die meist aufgepinselt, aufgesprüht oder als Ummantelung auf den Werkstoff aufgetragen werden.

Flußmittel auf Basis von Kaliumsalzen komplexer Aluminiumfluoride sind besonders gut als Flußmittel geeignet.

Die US-A 4,579,605 beschreibt ein Verfahren zur Herstellung eines als Lötflußmittel verwendbaren Gemisches von Kaliumtetrafluoraluminat und Dikaliumpentafluoraluminat oder sein Hydrat, wobei man wäßrige Fluoraluminiumsäure (herstellbar aus Aluminiumhydroxid und Flußsäure) in einer Fällstufe mit einer wäßrigen Lösung einer Kaliumverbindung umsetzt, den dabei resultierenden Feststoff von der wäßrigen Phase abtrennt und den abgetrennten Feststoff trocknet.

Die europäische Patentanmeldung EP-A-0 063 750 (= US-A 4,428,920) beschreibt ein Herstellverfahren für ein Flußmittel. Gemäß jenem Verfahren wird Fluoroaluminiumsäure in einer Fällstufe mit einer Kalium-Verbindung versetzt, vorzugsweise Kaliumhydroxid in Form einer Kalilauge, woraufhin Kaliumsalze von komplexen Fluoriden des Aluminiums ausfallen. Man trennt dann den Wassergehalt der in dieser Fällstufe entstehenden Suspension von Kaliumsalzen von komplexen Fluoriden des Aluminiums ab und trocknet die erhaltenen Feststoffe bei 120 °C. Man erhält bei diesem Verfahren ein unterhalb von 575 °C rückstandsfrei schmelzendes Flußmittel.

Bei jenem Verfahren wird vorteilhafter Weise frisch zubereitete Fluoraluminiumsäure (herstellbar aus Tonerde-Hydrat und Flußsäure) eingesetzt. Die Kaliumverbindung setzt man im stöchiometrischen Unterschuß ein; dies bedeutet, daß im wäßrigen Überstand des ausfallenden komplexen Aluminiumfluorids noch Fluoraluminiumsäure vorhanden ist.

Aufgabe der vorliegenden Erfindung ist es, ein Verfahren anzugeben, bei welchem die Ausgangsverbindungen - bei mindestens gleichbleibenden Produkteigenschaften insbesondere im Hinblick auf die Anwendung als Lötflußmittel - besser ausgenutzt werden. Diese Aufgabe wird durch das Verfahren der vorliegenden Erfindung gelöst.

Das erfindungsgemäße Verfahren zur Herstellung eines als Lötflußmittel verwendbaren Gemisches von Kaliumsalzen komplexer Aluminiumfluoride, welches ein Gemisch von Kaliumtetrafluoraluminat und Dikaliumpentafluoraluminat oder sein Hydrat enthält, sieht vor, daß man wäßrige Fluoraluminiumsäure in einer Fällstufe mit einer wäßrigen Lösung einer Kaliumverbindung umsetzt und dabei in der Fällstufe ein Molverhältnis von Kalium zu Aluminium im Bereich unterhalb 1:1 einstellt, der in der Fällstufe entstehenden Suspension Kaliumkryolith oder ein Kaliumkryolith enthaltendes Gemisch zusetzt, den dabei resultierenden Feststoff von der wäßrigen Phase abtrennt und den abgetrennten Feststoff trocknet, wobei man den Kaliumkryolith oder das Kaliumkryolith enthaltende Gemisch in einer solchen Menge der in der Fällstufe entstehenden Suspension zusetzt, daß man für den Gesamtansatz ein Molverhältnis von Kalium zu Aluminium im Bereich von 1:1 bis 2:1 einstellt.

Die Fluoraluminiumsäure wird vorteilhafter Weise frisch aus Tonerde-Hydrat und Flußsäure zubereitet. Die Flußsäure kann eine mehr oder weniger große Konzentration an Fluorwasserstoff enthalten, beispielsweise bis hin zu 60 Gew.-%. Zweckmäßig verwendet man Flußsäure mit einer Konzentration von 5 bis 30 Gew.-% Fluorwasserstoff. Die danach erhältliche Fluoraluminiumsäure kann einen Überschuß an Fluorid aufweisen. Das Verhältnis von Fluor zu Aluminium liegt vorzugsweise im Bereich von 4.0:1 bis 5:1, ganz besonders bevorzugt im Bereich von 4.0:1 bis 4.4:1.

Man verwendet solche Kaliumverbindungen, die bei der Umsetzung mit Fluoraluminiumsäure zu einer Ausfällung von Kaliumsalzen von komplexen Fluoriden des Aluminiums führen. Besonders zweckmäßig sind basische Kaliumverbindungen, deren Anionen bei der Umsetzung gelöst oder gasförmig aus der in der Fällstufe entstehenden Suspension abgetrennt werden können, wie beispielsweise Kaliumhydroxid oder Kaliumcarbonat. Vorzugsweise setzt man Kaliumhydroxid ein, und zwar besonders bevorzugt in Form einer Kalilauge einer Konzentration von 2 bis 25 Gew.-% KOH. Es ist möglich, wenn auch nicht bevorzugt, einen Teil der basischen Kaliumverbindung (beispielsweise des Kaliumhydroxids) durch andere Kaliumverbindungen wie Kaliumchlorid zu ersetzen; beispielsweise kann man bis zu einem Viertel des Kaliumhydroxids in Form von Kaliumchlorid oder anderen Kaliumverbindungen einsetzen.

Unter Bezug auf die bevorzugte Ausführungsform, nämlich der Verwendung von Kaliumhydroxid als Kaliumverbindung, wird die Erfindung weiter erläutert, ohne daß sie jedoch auf die Verwendung von Kaliumhydroxid eingeschränkt sein soll.

Die Umsetzung in der Fällstufe, also bei der Reaktion zwischen Fluoraluminiumsäure und Kaliumhydroxid, kann im Bereich von Raumtemperatur bis hin zum Kochpunkt des Reaktionsgemisches liegen. Bevorzugt sind Temperaturen im Bereich von 70 °C bis 90 °C. Die Temperatur bei der Zugabe des Kaliumkryoliths liegt zweckmäßig bis hin zum Kochpunkt, z. B. zwischen 70 °C und dem Kochpunkt, vorzugsweise im Bereich von 70 °C bis 90 °C.

Als Kaliumkryolith kann man reines K₃AlF₆ verwenden. Brauchbar sind auch technische Produkte, die nur zu einem Teil (beispielsweise 50 Gew.-% oder mehr) an dieser Verbindung enthalten. Weitere Bestandteile solcher technischer als "Kryolith" bezeichneten Zusammensetzungen sind Dikaliumpentafluoraluminat und seine Hydrate, gegebenenfalls auch Aluminiumfluorid oder seine Hydrate bzw. Kaliumfluorid und andere produktionsbedingte Verunreinigungen. Ein im erfindungsgemäßen Verfahren anwendbares als "Kryolith" bezeichnetes Produkt weist beispielsweise die Formel K_{2,8}AlF_{5,8} auf. Der Kryolith wird vorzugsweise fein gepulvert eingesetzt.

Nach Durchführung der Fällstufe kann eine Nachreaktionsphase durchgeführt werden. Hierzu kann man das Reaktionsgemisch vorteilhafterweise rühren. Die Zeitdauer beträgt zweckmäßig 0,2 bis 1 Stunde. Die Temperatur liegt während der Nachreaktionsphase vorzugsweise im Bereich von 70 °C bis hin zum Kochpunkt.

Nach der Zugabe des Kryoliths kann eine Nachreaktionsphase durchgeführt werden. Die Zeitdauer liegt zweckmäßig im Bereich von 1 bis 6 Stunden, die Temperatur liegt zweckmäßig im Bereich von 70 °C bis hin zum Kochpunkt.

Im folgenden werden Erläuterungen für das Molverhältnis von Kalium zu Aluminium zu Fluor gegeben, und zwar im Hinblick auf das entsprechende Verhältnis der Ausgangsprodukte in der Fällstufe, in bezug auf das entsprechende Verhältnis des Gesamtansatzes (also unter Berücksichtigung des Ausgangsmaterials in der Fällstufe zuzüglich des eingesetzten Kaliumkryoliths) und in bezug auf das entsprechende Molverhältnis in den erhaltenen Produkten.

Die Mengen an Ausgangsmaterialien (Fluoraluminiumsäure/ Kaliumverbindung) in der Fällstufe wählt man vorzugsweise derart, daß ein Molverhältnis von Kalium:Aluminium:Fluor im Bereich von 0,60-0,95:1:4-4,8 eingehalten wird. Bevorzugt ist ein Molverhältnis von 0,80-0,90:1:4-4,4.

In bezug auf das Molverhältnis im Gesamtansatz, also einschließlich der Zugabe von Kaliumkryolith oder entsprechenden Kaliumkryolith enthaltenden Gemischen, beträgt das Molverhältnis von Kalium:Aluminium:Fluor vorzugsweise 1,0 - 2:1:4-5, insbesondere 1,1 - 1,2:1:4,4 - 4,8.

Führt man das erfindungsgemäße Verfahren wie vorstehend beschrieben durch, so erhält man nach Zugabe des Kryoliths, Abtrennung des vorhandenen Wassers und Trocknen bzw. Unterwerfen des Produkts einer Temperaturbehandlung ein Gemisch von Kaliumsalzen komplexer Fluoride, welches sehr gut als Lötflußmittel brauchbar ist und dessen Molverhältnis von Kalium:Aluminium:Fluor im Bereich von 1,1 - 1,3:1:4,1 - 4,3 liegt. Es wurde festgestellt, daß das Produkt im wesentlichen aus Kaliumtetrafluoraluminat und Dikaliumpentafluoraluminat bzw. dessen Hydrat besteht. Kryolith wird allenfalls in geringen Mengen nachgewiesen. Die Flußmitteleigenschaften des Materials lassen sich noch weiter verbessern, wenn man - wie in der EP-A-0723835 beschrieben - das Hydrat von Dikaliumpentafluoraluminat bzw. beim Trocknen lediglich reversibel dehydratisiertes Dikaliumpentafluoraluminat in irreversibel dehydratisiertes Dikaliumpentafluoraluminat umwandelt. Dies geschieht, indem man wie in der EP-A-0723835 beschrieben das Gemisch von Kaliumsalzen komplexer Aluminiumfluoride gegebenenfalls vortrocknet und dann einer Temperaturbehandlung unterwirft, ohne daß das Produkte sintert oder schmilzt. Vorteilhaft bedeutet der Begriff "Temperaturbehandlung", daß man es auf eine Temperatur oberhalb von 228 °C, vorzugsweise oberhalb von 265 °C erhitzt, bis der gewünschte Grad der irreversiblen Dehydratisierung erreicht ist. Ein solches Produkt führt zu einem noch besseren Fließverhalten des Lots auf der Oberfläche von Metallwerkstoffen.

Gewünschtenfalls kann man dem beim erfindungsgemäßen Verfahren erhaltenen Gemisch, sofern es als Lötflußmittel verwendet werden soll, noch metallische Zusätze beimischen, wie dies in den US-Patenten 5,100,048 und 5,190,596 beschrieben ist. Man mischt ein Metall wie Silicium, Kupfer oder Germanium vorzugsweise in Form kleiner Partikel, beispielsweise mit einer Größe von unterhalb 1.000 µm, vorzugsweise im Bereich von 4 bis 80 µm, zu. Die Metallkomponente ist im fertigen Flußmittel dann in einer Menge von ca. 9 bis 85 Gew.-% enthalten.

Im vorliegenden Verfahren wird eine Reaktionsmischung verwendet, die nach ihrer Aufarbeitung das gewünschte Gemisch von Kaliumsalzen komplexer Aluminiumfluoride, das als Flußmittel für das Löten von Leichtmetallwerkstoffen geeignet ist, liefert. Dieses Reaktionsgemisch umfaßt Fluoraluminiumsäure, Kaliumsalze von komplexen Fluoriden des Aluminiums sowie Kaliumkryolith. Es ist erhältlich, indem man den Reaktanten in der Fällstufe Kaliumkryolith zusetzt.

Das bei dem erfindungsgemäßen Verfahren erhältliche Gemisch von Kaliumsalzen komplexer Aluminiumfluoride ist insbesondere als Flußmittel für das Löten von Leichtmetallwerkstoffen geeignet, da es einen Schmelzpunkt unterhalb von 575 °C aufweist. Es kann allerdings auch für andere Anwendungszwecke, beispielsweise als Füllstoff, in der Glasherstellung oder für Schleifmittel, verwendet werden, in denen solche Verbindungstypen erfahrungsgemäß einsetzbar sind.

Die vorliegenden Beispiele sollen die Erfindung weiter erläutern, ohne sie in ihrem Umfang einzuschränken.

### Beispiel 1:

614 kg Fluorwasserstoff in Form einer 20 Gew.-% Fluorwasserstoff enthaltenden Flußsäure und 550 kg Aluminiumhydroxid (Reinheitsgrad 99 %) wurden zur Bildung von Fluoraluminiumsäure zur Umsetzung gebracht. Bei einer Temperatur von 80 °C wurde in die erhaltene Reaktionsmischung eine 15 Gew.-% KOH enthaltende Kalilauge eingegeben, die durch Auflösung von 400 kg KOH (Reinheitsgrad 90 %) erhalten wurde. Es bildete sich eine Suspension von ausfallenden Kaliumsalzen von komplexen Aluminiumfluoriden. In das Reaktionsgemisch, das in der vorstehend beschriebenen Fällstufe erhalten worden war, wurden 270 kg eines handelsüblichen "Kryoliths" der "Formel" K_{2,8}AlF_{5,8} eingegeben.

Das erhaltene Verfahrensprodukt enthält KAlF₄ und K₂AlF₅ und weist einen Schmelzpunkt von 570 °C auf und ist hervorragend als Lötflußmittel verwendbar.

### Beispiel 2:

Herstellung eines Flußmittels mit Temperaturbehandlung zwecks Bildung irreversibel dehydratisierten Dikaliumpentafluoraluminats

Beispiel 1 wurde wiederholt. Das nach Kryolithzugabe erhaltene Produkt wurde filterfeucht in einem Stromtrockner eingegeben. Die Eingangstemperatur im Trockner lag bei etwa 570 °C, die Verweilzeit betrug etwa eine halbe Sekunde.

Das erhaltene Produkt wurde durch Röntgendiffraktomethrieaufnahmen untersucht. Es wurde festgestellt, daß neben überwiegend Kaliumtetrafluoraluminat das irreversibel dehydratisierte Dikaliumpentafluoraluminat enthalten war. Der Schmelzpunkt dieses Produktes lag bei etwa 570 °C. Bei der Anwendung dieses Produktes in Form einer wäßrigen Suspension resultierte eine sehr gleichförmige Beschichtung des Werkstückes, und das Lot wies ein noch besseres Fließverhalten als mit dem Flußmittel des Beispiel 1 auf.

## Patentansprüche

1. Verfahren zur Herstellung eines als Lötflußmittel verwendbaren Gemisches von Kaliumsalzen komplexer Aluminiumfluoride, welches ein Gemisch von Kaliumtetrafluoraluminat und Dikaliumpentafluoraluminat oder sein Hydrat enthält, wobei man wäßrige Fluoraluminiumsäure in einer Fällstufe mit einer wäßrigen Lösung einer Kaliumverbindung umsetzt und dabei in der Fällstufe ein Molverhältnis von Kalium zu Aluminium im Bereich unterhalb 1:1 einstellt, der in der Fällstufe entstehenden Suspension Kaliumkryolith oder ein Kaliumkryolith enthaltendes Gemisch zusetzt, den dabei resultierenden Feststoff von der wäßrigen Phase abtrennt und den abgetrennten Feststoff trocknet, wobei man den Kaliumkryolith oder das Kaliumkryolith enthaltende Gemisch in einer solchen Menge der in der Fällstufe entstehenden Suspension zusetzt, daß man für den Gesamtansatz ein Molverhältnis von Kalium zu Aluminium im Bereich von 1:1 bis 2:1 einstellt.

2. Verfahren nach Anspruch 1, **dadurch gekennzeichnet, daß** man Fluoraluminiumsäure einsetzt mit einem Molverhältnis von Fluor zu Aluminium im Bereich von 4:1 bis 5:1.

3. Verfahren nach einem der vorhergehenden Ansprüche, **dadurch gekennzeichnet, daß** man die Umsetzung in der Fällstufe bei einer Temperatur bis hin zum Kochpunkt des Reaktionsgemisches, vorzugsweise bei einer Temperatur von 70 bis 90 °C und bei der Zugabe des Kaliumkryoliths oder des Kaliumkryolith enthaltenden Gemisches bei einer Temperatur von 70 °C bis zum Kochpunkt durchführt.

4. Verfahren nach einem der vorhergehenden Ansprüche, daß man den entwässerten Feststoff derart einer Hochtemperaturbehandlung unterwirft, daß mindestens ein Teil der genannten komplexen Aluminiumfluoride in irreversibel dehydratisiertes Dikaliumpentafluoraluminat umgewandelt wird.

5. Verfahren nach Anspruch 1, **dadurch gekennzeichnet, daß** man als Kaliumverbindung Kaliumhydroxid in Form von Kalilauge einsetzt.

6. Verfahren nach Anspruch 1, **dadurch gekennzeichnet, daß** der Kryolith feingepulvert eingesetzt wird.

## Claims

1. A method for the preparation of a mixture of potassium salts of complex aluminium fluorides which can be used as a soldering flux, which mixture contains a mixture of potassium tetrafluoroaluminate and dipotassium pentafluoroaluminate or the hydrate thereof, in which aqueous fluoroaluminic acid is reacted with an aqueous solution of a potassium compound in a precipitation stage, and in so doing a molar ratio of potassium to aluminium in the range of less than 1:1 is set in the precipitation stage, potassium cryolite or a mixture which contains potassium cryolite is added to the suspension produced in the precipitation stage, the resulting solid is separated off from the aqueous phase, and the solid separated off is dried, in which the potassium cryolite or the mixture containing potassium cryolite is added to the suspension produced in the precipitation stage in such a quantity that a molar ratio of potassium to aluminium in the range of 1:1 to 2:1 is set for the total formulation.

2. A method according to Claim 1, **characterised in that** fluoroaluminic acid which has a molar ratio of fluorine to aluminium in the range of 4:1 to 5:1 is used.

3. A method according to one of the preceding claims, **characterised in that** the reaction in the precipitation stage is carried out at a temperature up to the boiling point of the reaction mixture, preferably at a temperature of 70 to 90°C, and upon the addition of the potassium cryolite or the mixture containing potassium cryolite at a temperature from 70°C up to the boiling point.

4. A method according to one of the preceding claims, **characterised in that** the dewatered solid is subjected to high-temperature treatment such that at least part of the afore-mentioned complex aluminium fluorides is converted into irreversibly dehydrated dipotassium pentafluoroaluminate.

5. A method according to Claim 1, **characterised in that** potassium hydroxide in the form of potassium hydroxide solution is used as the potassium compound.

6. A method according to Claim 1, **characterised in that** the cryolite is used in finely powdered form.

## Revendications

1. Procédé pour préparer un mélange de sels de potassium de fluorures d'aluminium complexes, pouvant être utilisé en tant que flux à braser et qui contient un mélange de tétrafluoroaluminate de potassium et de pentafluoroaluminate dipotassique ou son hydrate, selon lequel on fait réagir de l'acide fluoroaluminique aqueux, lors d'une étape de précipitation, avec une solution aqueuse d'un composé de potassium, et on règle, lors de l'étape de précipitation, un rapport molaire du potassium à l'aluminium dans la gamme inférieure à 1:1, on ajoute de la cryolite de potassium ou un mélange contenant de la cryolite de potassium à la suspension qui s'est formée lors de l'étape de précipitation, on sépare de la phase aqueuse la substance solide résultante et on sèche la substance solide séparée, auquel cas on ajoute la cryolite de potassium ou le mélange contenant de la cryolite de potassium à la suspension qui s'est formée lors de l'étape de précipitation, en une quantité telle qu'on établisse, dans la composition globale, un rapport molaire du potassium à l'aluminium dans la gamme de 1:1 à 2:1.

2. Procédé selon la revendication 1, **caractérisé en ce qu'**on utilise l'acide fluoroaluminique suivant un rapport molaire du fluor à l'aluminium dans la gamme de 4:1 à 5:1.

3. Procédé selon l'une des revendications précédentes, **caractérisé en ce qu'**on effectue la mise en réaction, lors de l'étape de précipitation, à une température pouvant aller jusqu'au point d'ébullition du mélange réactionnel, de préférence à une température de 70 à 90°C, et moyennant l'addition de la cryolite de potassium ou du mélange contenant de la cryolite de potassium, à une température pouvant aller de 70° jusqu'au point d'ébullition.

4. Procédé selon l'une des revendications précédentes, **caractérisé en ce qu'**on soumet la substance solide déshydratée à un traitement à haute température tel, qu'au moins une partie desdits fluorures d'aluminium complexes soit convertie en du pentafluoroaluminate dipotassique déshydraté d'une manière irréversible.

5. Procédé selon la revendication 1, **caractérisé en ce qu'**on utilise, comme composé de potassium, de l'hydroxyde de potassium sous forme de lessive de potasse.

6. Procédé selon la revendication 1, **caractérisé en ce qu'**on utilise la cryolite à l'état de poudre fine.
